# FASCICULE DE BREVET EUROPEEN

(11) **EP 2 932 341 B1**
(45) Date de publication et mention de la délivrance du brevet: **23.10.2019**
(21) Numéro de dépôt: 13801581.3
(22) Date de dépôt: 06.12.2013
(51) Int. Cl.: G05D 1/10, G05D 1/06

(54) **PROCÉDÉ DE PILOTAGE D'UN ENSEMBLE DE ROBOTS ET ENSEMBLE DE ROBOTS**
VERFAHREN ZUM STEUERN EINER GRUPPE VON ROBOTERN UND GRUPPE VON ROBOTERN
METHOD FOR CONTROLLING A SET OF ROBOTS, AND SET OF ROBOTS

(30) Priorité: 11.12.2012 FR 1203360
(43) Date de publication de la demande: 21.10.2015
(73) Titulaire: THALES, 92400 Courbevoie (FR); École Nationale Supérieure de Techniques Avancées Bretagne, 29806 Brest Cedex 9 (FR)
(72) Inventeur: BRUNET, Jean-Philippe, 29217 Plougonvelin (FR); SOUSSELIER, Thomas, 75014 Paris (FR); DREO, Johann, 28230 Epernon (FR); JAULIN, Luc, 29200 Brest (FR)
(74) Mandataire: Derval, Estelle
(86) Numéro de dépôt international: PCT/EP2013/075781
(87) Numéro de publication internationale: WO 2014/090697

(56) Documents cités:
- US-A1- 2006 235 584
- NA CEN ET AL: "Formation control of robotic swarms based on sonar sensing", INTELLIGENT SENSORS, SENSOR NETWORKS AND INFORMATION PROCESSING (ISSNIP), 2009 5TH INTERNATIONAL CONFERENCE ON, IEEE, PISCATAWAY, NJ, USA, 7 décembre 2009 (2009-12-07), pages 31-36, XP031630513, ISBN: 978-1-4244-3517-3
- PEREIRA G A S ET AL: "Formation control with configuration space constraints", PROCEEDINGS OF THE 2003 IEEE/RSJ INTERNATIONAL CONFERENCE ON INTELLIGENT ROBOTS AND SYSTEMS. (IROS 2003). LAS VEGAS, NV, OCT. 27 - 31, 2003; [IEEE/RSJ INTERNATIONAL CONFERENCE ON INTELLIGENT ROBOTS AND SYSTEMS], NEW YORK, NY : IEEE, US, vol. 3, 27 octobre 2003 (2003-10-27), pages 2755-2760, XP010675506, DOI: 10.1109/IROS.2003.1249287 ISBN: 978-0-7803-7860-5
- JAKOB FREDSLUND ET AL: "A General Algorithm for Robot Formations Using Local Sensing and Minimal Communication", IEEE TRANSACTIONS ON ROBOTICS AND AUTOMATION, IEEE INC, NEW YORK, US, vol. 18, no. 5, 5 octobre 2002 (2002-10-05), pages 837-846, XP011079557, ISSN: 1042-296X

## Description

L'invention concerne le domaine du pilotage d'un ensemble de robots, comme par exemple des drones, dotés de capacités de propulsion autonomes et dépourvus de pilote (humain) à bord.

De nombreuses applications nécessitent de faire évoluer un ensemble de robots en essaim ou en meutes (de l'expression anglo-saxonne « swarm ») que ce soit en milieu aquatique (par exemple en milieu sous-marin), en milieu aérien ou en milieu terrestre. Parmi les applications connues en milieu sous-marin on peut citer la détection de mines ou de source de pollution. Dans ces applications, on peut être amené à piloter des robots selon différents profils de mission (ou trajectoires) et selon différentes configurations de meute. Par exemple, dans les applications de détection de mines, on pilote de préférence les robots de façon à ce qu'ils soient disposés en ligne et espacés deux à deux d'une distance fixe le long de cette ligne. Un profil de mission consiste à les faire se déplacer en ligne droite perpendiculairement à la ligne selon laquelle ils sont espacés. La distance séparant deux robots adjacents est choisie de façon à être au plus deux fois égale à la portée des moyens de détection de mines embarqués à bord des robots, marges d'erreurs comprises. Cela permet de ne laisser aucune lacune dans l'exploration d'un terrain donné par la meute en question.

Le pilotage d'un ensemble de robots afin de lui faire remplir sa mission est un réel enjeu. En effet, les capacités de calculs des robots sont, par définition, limitées et encouragent l'utilisation d'une approche où le nombre des interactions compensent le manque de puissance de calcul. De même, la miniaturisation de robots induit une augmentation de l'homogénéité de capacité de ceux-ci qu'il faut arriver à compenser pour garantir la flexibilité de la meute. La difficulté d'un tel contrôle s'accroît notamment lorsque que l'on cherche à maintenir une configuration de meute particulière.

Plusieurs procédés de pilotage de façon à assurer le maintien de la cohésion dans un essaim existent. Dans ces solutions, les robots sont individualisés comme c'est le cas dans la demande de brevet US 2006/235584 ; dans l'article «formation control of robotic swarms based on sonar sensing », Na Cen et Al Intelligent sensors, sensor networks and information processing, 2009 5th international conférence on IEEE, piscataway, NJ, USA, 7 décembre 2009, pages 31-36, dans l'article : " formaton control with configuration space constaints", Pereira G A S et Al, proceedings of the 2003 IEEE/RSJ International conférence on intelligent robots and systems, Las vegas, NV, Oct 27-31, 2003, new york : IEEE, US, vol 3, 27 octobre 2003, pages 2755-2760 ; et dans l'article *"*a General algorithm for robot formations using local sensing and minimal communication", Jakob Fredslunf et al, IEEE transactions on robotics and automation IEEE, INC, New York, US, vol 18, no 5, 1 octobre 2002.

Chaque robot a un rôle ou une place prédéterminée dans la meute. La solution la plus évidente repose sur la centralisation des positions absolues des robots au sein d'un système coordinateur (ou système maître qui peut être un robot maître). Le robot maître commande les autres robots de façon à leur faire rejoindre les positions qui leurs sont respectivement attribuées dans la meute. Une autre solution consiste à faire communiquer tous les robots entre eux. Par ce biais, chacun échange sa position avec l'ensemble de des robots de la meute et se déplace à une position qui lui est attribuée dans la meute et par rapport à la trajectoire.

Un inconvénient de ces solutions est qu'elles sont très coûteuses en communication. Si la communication est relativement facile dans l'air et avec un nombre limité de robots, elle est plus difficile dans l'eau ou lorsque le nombre de robots augmente dans la meute.

Par ailleurs, chaque robot ayant une place attribuée dans la meute, un contrôle constant doit être appliqué à l'ensemble des robots afin de vérifier qu'il n'y a eu aucune perte de robots, de gérer les risques de collision et de planifier les déplacements collectifs. Cela rend le système peut adaptatif et peu robuste.

Le positionnement des robots étant absolu dans une solution centralisée, une grande précision est nécessaire pour que le positionnement relatif des robots dans la meute soit d'une précision relative acceptable. Un échange rapide des positions est de plus nécessaire, toute latence oblige à disposer de modèles d'anticipation de position délicats à mettre en oeuvre, et source d'erreurs. Un mauvais positionnement relatif pénalise la couverture du terrain et risque de créer des lacunes lors de son exploration. Par exemple, dans une application de détection de mines dans laquelle la portée des moyens de détection de mines dont sont munis les robots est de 5 m, si la distance entre les robots adjacents dans la meute décrit plus haut est de 10 m, tout le terrain dans lequel circulent les robots est exploré. Or, les systèmes de navigation sous-marine permettent de déterminer la position absolue d'un robot avec une précision de quelques mètres seulement. Il est très difficile de maintenir les robots espacés de 10 m au moyen de ces systèmes de navigation. Une solution pour éviter les lacunes consiste à rapprocher les robots les uns des autres de façon à ce que leurs zones de détection se recouvrent. Toutefois, cela conduit à des systèmes d'exploration moins performants (il faut plus de temps pour scanner un terrain de surface donnée) ou plus coûteux (pour obtenir les mêmes performances en termes de durée d'exploration on est amené à augmenter le nombre de robots dans la meute).

Enfin, la centralisation ou la dépendance à une communication élaborée entraîne une moins grande robustesse du système. En effet, dans ces approches, la tolérance aux pannes ou la flexibilité d'adaptation face à des évènements imprévus nécessitent des efforts trop conséquents pour êtres effectués à un coût raisonnable.

Le but de la présente invention est de proposer un procédé de pilotage d'un ensemble de robots permettant de l'amener ou le maintenir dans une configuration de meute prédéterminée de manière robuste à faible coût.

A cet effet, l'invention a pour objet un procédé de pilotage d'un ensemble de robots pour l'amener ou le maintenir dans une configuration de meute prédéterminée et pour qu'il suive une trajectoire globalement parallèle à une trajectoire idéale, le procédé comprenant pour chaque robot :
- une étape d'élaboration d'une consigne de guidage dudit robot à un instant donné correspondant à une correction à apporter au vecteur vitesse dudit robot, les consignes de guidage de chacun des robots de l'ensemble de robots étant déterminées à partir d'un ensemble de contraintes commun à tous les robots comprenant une contrainte de meute comprenant au moins un ensemble d'au moins une contrainte de positionnement relatif entre le robot et des voisins de premier ordre dans la meute comprenant une première contrainte de distance correspondant à une distance idéale devant séparer le robot de ses voisins du premier ordre dans la configuration de meute,
- une étape de pilotage du robot de façon à respecter la consigne de guidage.

Avantageusement, l'ensemble de contraintes comprend une contrainte d'appartenance représentative d'une deuxième contrainte de positionnement relatif entre chaque robot et les autres robots, que les autres robots doivent effectivement vérifier pour appartenir à un ensemble de voisins effectifs dudit robot à l'instant donné, ainsi qu'une trajectoire idéale quadridimensionnelle idéalement suivie par les robots de l'ensemble de robots et un domaine de confiance défini par la position dudit robot par rapport à une position idéale correspondant à une position que devrait occuper ledit robot s'il suivait la trajectoire idéale et éventuellement par son orientation par rapport à la trajectoire idéale tridimensionnelle comprise dans la trajectoire quadridimensionnelle, et l'étape de génération de la consigne de guidage dudit robot à l'instant donné comprend une étape de détermination d'un ensemble de voisins effectifs dudit robot vérifiant la contrainte d'appartenance au voisinage dudit robot, la consigne de guidage dudit robot à l'instant donné étant élaborée à partir de la position dudit robot :
- relativement à un ensemble d'au moins une position cible définie à partir d'une position effective de chacun des voisins effectifs de l'ensemble de voisins effectifs et à partir de la contrainte de meute et relativement à une position préférée correspondant à un point du domaine de confiance, lorsque l'ensemble des voisins effectifs est non vide,
- relativement à la position préférée lorsque l'ensemble de voisins effectifs est vide.

Avantageusement, le domaine de confiance est une position idéale et dans lequel la position préférée est la position idéale.

Avantageusement, le domaine de confiance est une courbe, une surface ou un volume.

Avantageusement, l'étape d'élaboration de la consigne de guidage comprend :
- une étape d'acquisition, pour acquérir, au moyen de moyens de perception embarqués à bord dudit robot, des mesures permettant de localiser les autres robots relativement audit robot,
   - une étape de sélection, utilisant lesdites mesures, dans laquelle on sélectionne un ensemble de voisins effectifs du robot considéré correspondant à un sous-ensemble de robots des autres robots qui respecte la contrainte d'appartenance vis-à-vis du robot, l'ensemble de voisins effectifs étant vide lorsque le robot n'a acquis aucune mesure lui permettant de localiser les autres robots lors de l'étape d'acquisition.

Avantageusement, l'étape d'élaboration de la consigne de guidage dudit robot comprend, lorsque l'ensemble de voisins effectifs comprend au moins un robot appelé voisin effectif, pour chaque voisin effectif :
- une étape de détermination d'une position effective correspondant à la position effectivement occupée par ledit au moins un voisin effectif relativement audit robot à partir des mesures permettant de localiser ledit voisin effectif acquises par ledit robot,
- une étape de détermination d'un ensemble de positions idéales locales correspondant aux positions que pourrait occuper le robot par rapport au voisin effectif pour respecter la contrainte de meute et une étape de détermination d'une position cible correspondant à une position idéale locale que le robot pourrait atteindre le plus rapidement.

Avantageusement, l'étape de détermination de la consigne de guidage dudit robot comprend :
- une étape de détermination d'un barycentre global correspondant à une moyenne pondérée de la dite au moins une position cible et de la position idéale par des premiers et respectivement deuxième poids,
- une étape de détermination d'une erreur de position affectant la position du robot pour atteindre le barycentre global,
- une étape de détermination d'une correction à apporter au vecteur vitesse du robot de façon à réduire cette erreur.

Avantageusement, l'unique ensemble de contraintes comprend au moins une contrainte variable en fonction d'un paramètre mesurable.

Avantageusement, l'unique ensemble de contraintes comprend au moins une contrainte présentant une unique valeur.

Avantageusement, lorsqu'aucun obstacle vérifiant une condition d'évitement prédéterminée n'est détecté par le robot l'étape d' élaboration de la consigne de guidage du robot est réalisée à intervalles de temps réguliers et est suivie d'une étape de pilotage du robot de façon qu'il respecte la consigne de guidage, et, lorsque le robot détecte au moins un obstacle vérifiant la condition d'évitement d'obstacle, une étape d'établissement d'une consigne de guidage d'évitement d'obstacle suivie d'une étape de pilotage du robot de façon qu'il respecte la consigne de guidage d'évitement d'obstacle.

Avantageusement, chaque robot génère ladite consigne de guidage et assure l'étape de pilotage de façon à respecter la consigne de guidage.

L'invention a également pour objet un ensemble de robots aptes à mettre en oeuvre le procédé selon l'invention, comprenant des moyens de guidage embarqués à bord de chacun des robots, les moyens de guidage embarqués étant configurés de façon à mettre oeuvre l'étape d'élaboration de la consigne de guidage.

D'autres caractéristiques et avantages de l'invention apparaîtront à la lecture de la description détaillée qui suit, faite à titre d'exemple non limitatif et en référence aux dessins annexés dans lesquels :
- la figure 1 représente schématiquement un ensemble de robots respectant un exemple de configuration de meute,
- la figure 2 représente schématiquement un robot d'un ensemble de robots selon l'invention,
- la figure 3 représente schématiquement les étapes du procédé de pilotage d'un robot selon l'invention,
- la figure 4 représente schématiquement la détermination d'une position cible dans le cas d'une configuration de meute matérialisée par une distance à respecter entre un robot et ses voisins directs,
- la figure 5 représente schématiquement les trajectoires suivies par un ensemble de robots lors de la mise en oeuvre d'un procédé de pilotage d'un ensemble de robots selon l'invention,
- la figure 6 représente schématiquement les trajectoires suivies par un ensemble de robots lors de la mise en oeuvre d'un procédé de pilotage d'un ensemble de robots selon l'invention lorsque des robots rencontrent un obstacle.

D'une figure à l'autre, les mêmes éléments sont repérés par les mêmes références.

L'invention concerne un procédé de pilotage d'un ensemble de robots comprenant au moins 2 robots permettant de l'amener ou le maintenir dans une configuration de meute prédéterminée et de suivre une trajectoire globalement parallèle à une trajectoire idéale. Par configuration de meute on entend une figure géométrique formée par l'ensemble des robots. Ce procédé comprend, pour chaque robot, une étape de génération d'une consigne de guidage globale qui est une consigne de guidage correspondant à une correction à apporter à son vecteur vitesse et une étape de pilotage du robot de façon qu'il respecte la consigne de guidage. Autrement dit, l'étape de pilotage est une étape d'asservissement du vecteur vitesse du robot de façon à corriger le vecteur vitesse. La correction vise à réduire une erreur sur le positionnement du robot. L'étape d'élaboration 200 de la consigne de guidage est réalisée au moyen de moyens, c'est-à-dire de dispositifs, embarqués à bord du robot. Elle est réalisée à partir de la perception de l'environnement du robot au moyen de moyens de mesure ou de perception embarqués à bord du robot, c'est-à-dire au moyen d'un dispositif de perception embarqué à bord du robot, et à partir d'un unique ensemble de contraintes embarquées à bord de chacun des robots.

Dans les applications décrites précédemment, on peut être amené à piloter les robots de façon à ce qu'ils se déplacent en respectant une configuration de meute prédéterminée. Ces configurations peuvent présenter différentes formes.

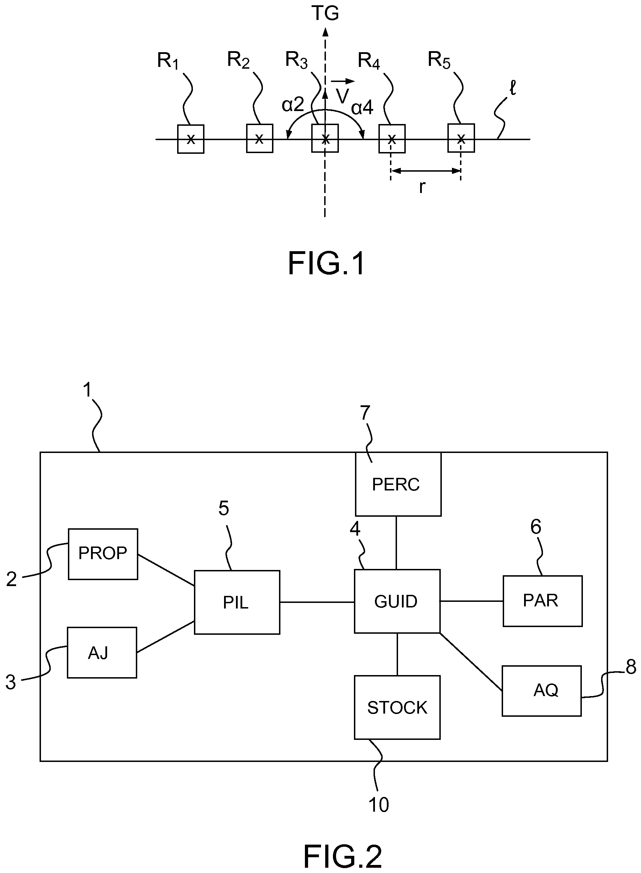

Un exemple que l'on a déjà donné en début de description est représenté sur la figure 1. Il s'agit d'une configuration dans laquelle les robots R1, R2, R3, R4, R5 sont disposés en ligne droite l et espacés deux à deux d'une distance idéale prédéterminée r fixe le long de cette ligne droite l. Cette configuration est intéressante pour explorer une zone sans laisser de lacunes au moyen de capteurs d'exploration embarqués à bord des robots. La distance idéale est choisie en fonction des performances des capteurs avec lesquels on souhaite balayer la zone (caméras, sonar, radar, détecteur magnétique, électrique, chimique, etc.). Elle est avantageusement inférieure ou égale au double de la portée des capteurs d'exploration diminuée de l'incertitude de positionnement.

Un deuxième exemple consiste à imposer une distance idéale fixe entre chaque robot et ses voisins les plus proches. On remarque que l'ensemble de robots piloté au moyen du procédé de pilotage selon l'invention a tendance dans ce cas à former des mailles en triangle équilatéral.

De façon générale la configuration de meute correspondant à la forme dite forme de meute formée par l'ensemble des robots est définie, dans le procédé selon l'invention, par une contrainte de meute. La contrainte de meute comprend un ensemble d'au moins une première contrainte de positionnement relatif entre un robot et ses voisins du premier ordre de façon que l'ensemble de robots présente la forme de meute. Elle peut aussi comprendre un ensemble d'au moins une première contrainte de positionnement entre le robot et des voisins d'ordre supérieur. L'ensemble d'au moins une contrainte de positionnement entre le robot et ses voisins du premier ordre comprend une première contrainte de distance correspondant à la distance devant séparer un robot de ses voisins de premier ordre (c'est-à-dire ses voisins les plus proche) pour former la figure définie par la configuration de meute. Autrement dit cette distance est une distance idéale devant séparer un robot et ses voisins dans la configuration de meute. Cette distance idéale est alors une distance de consigne. L'ensemble comprend en outre éventuellement une première contrainte de positionnement angulaire correspondant à un écart angulaire devant séparer entre eux les différents voisins de premier ordre du robot.

Les ensembles relatifs aux contraintes de positionnement relatifs avec les voisins d'ordre supérieur sont du même type.

Dans le procédé de pilotage selon l'invention, les consignes de guidage générées pour chacun des robots sont déterminées à partir d'une unique contrainte de meute comprenant au moins un ensemble d'au moins une première contrainte de positionnement relatif entre un robot et ses voisins de premier ordre dans la meute pour que l'ensemble de robots forme une meute présentant une forme prédéterminée.

Autrement dit, tous les robots reçoivent la même contrainte de meute. Cela signifie que la première contrainte de positionnement relatif entre un robot et ses voisins du premier ordre est une contrainte de positionnement relatif entre chaque robot de l'ensemble de robots et ses voisins du premier ordre dans la configuration de meute.

Les consignes de guidage ne sont pas déterminées à partir de positions absolues que devraient occuper les robots dans la meute mais à partir de positions relatives que devraient occuper les robots les uns par rapport aux autres pour former la figure souhaitée. Autrement dit, ce procédé ne nécessite pas d'attribuer des positions particulières à chacun des robots dans la meute. Il nécessite uniquement de fournir au robot une contrainte de positionnement commune à tous les robots, que chaque robot doit respecter relativement à ses voisins pour que l'ensemble de robots prenne la forme souhaitée. Ce procédé est donc plus robuste que les procédés de l'art antérieur.

Avantageusement, les consignes de guidage de chacun des robots à un instant donné sont déterminées à partir d'un unique ensemble de contraintes qui est fourni à l'ensemble des robots. Autrement dit, chacun des robots de l'ensemble reçoit les mêmes contraintes et détermine ses consignes de guidage à partir de ces mêmes contraintes. Autrement dit, l'ensemble de contrainte est commun à tous les robots.

Les contraintes qui sont fournies à chaque robot comprennent :
- la contrainte de meute,
- une contrainte d'appartenance représentative d'une deuxième contrainte de positionnement relatif audit robot, que les robots de l'ensemble de robots, autre que ledit robot, doivent effectivement vérifier, pour appartenir à un ensemble de voisins effectifs dudit robot à l'instant donné,
- une trajectoire idéale quadridimensionnelle idéalement suivie par les robots et
- un domaine de confiance défini par la position dudit robot par rapport à une position idéale correspondant à une position que devrait occuper le robot s'il suivait la trajectoire idéale et éventuellement par son orientation, c'est-à-dire par l'orientation du robot, par rapport à la trajectoire idéale tridimensionnelle comprise dans la trajectoire quadridimensionnelle.

Autrement dit, l'ensemble de contrainte comprend une contrainte d'appartenance commune à tous les robots. La contrainte d'appartenance est représentative d'une deuxième contrainte de positionnement entre chaque robot et les autres robots pour que les autres robots appartiennent à un voisinage effectif dudit robot à un instant donné.
La trajectoire idéale quadridimensionnelle revient à définir une trajectoire spatiale tridimensionnelle idéale et une vitesse idéale associée pouvant évoluer le long de la trajectoire.

L'étape de détermination de la consigne de guidage d'un robot à un instant donné comprend une étape de détermination d'un ensemble de voisins effectifs dudit robot vérifiant la contrainte d'appartenance au voisinage dudit robot.

Le domaine de confiance est une figure géométrique finie à 1, 2 ou 3 dimensions qui défini l'orientation que l'on souhaite donner à la meute par rapport à la trajectoire idéale. Il peut, par exemple, s'agir d'un segment d'un hexagone d'une sphère.

La consigne de guidage d'un robot à un instant donné est élaborée à partir de la position du robot :
- relativement à un ensemble d'au moins une position cible définie à partir de chaque position effective d'un ensemble de voisins effectifs, c'est-à-dire à partir des positions effectives de chacun des voisins effectifs, et à partir de la contrainte de meute, et relativement à une position préférée correspondant à un point du domaine de confiance, lorsque l'ensemble de voisins effectifs est non vide
- et relativement à la position préférée lorsque l'ensemble de voisins effectifs est vide.

Le procédé selon l'invention permet de piloter un ensemble de robots disposés de manière quelconque au départ, de façon à ce qu'ils viennent se déplacer parallèlement à la trajectoire tridimensionnelle idéale globalement avec la vitesse idéale en se mettant et se maintenant globalement dans une configuration de meute prédéterminée.

Dans le procédé selon l'invention, chaque robot se positionne en fonction des positions occupées par un ensemble de voisins relativement à ce robot. Le procédé permet de calculer la consigne de guidage d'un robot sans avoir à connaitre à la fois la position absolue du robot et la position absolue de tous les autres robots. Il nécessite uniquement de déterminer la position du robot relativement à un ensemble de robots effectifs comprenant zéro voisins ou plus ainsi que la position du robot relativement à la position préférée définie par rapport à l'ensemble des contraintes de mission. Cela permet d'assurer le suivi d'une configuration de meute prédéterminée de manière robuste et à bas coût.

Par ailleurs, la détermination de la consigne de guidage d'un robot ne nécessite pas de moyens de communication entre des robots de l'ensemble mais uniquement des moyens de perception qui acquièrent des données sur les robots qui permettent de déterminer leurs positions relatives.

En outre, dans ce procédé, les robots ne sont pas individualisés. Chaque robot assure son pilotage en fonction des mêmes contraintes (contrainte de voisinage et contraintes définissant la configuration de la meute, trajectoire idéale et éventuellement intervalle de confiance). Cette caractéristique rend le système de robots simple. En effet, les robots mettent tous en oeuvre le même procédé pour assurer leur pilotage, il n'est pas nécessaire de prévoir la mise en oeuvre de procédés spécifiques à chacun des robots en fonction de leur rôle dans la meute. Autrement dit, il n'est pas nécessaire de programmer individuellement les robots ni de les identifier ou de leur attribuer une place au sein de la meute. Cette caractéristique rend également le procédé robuste, notamment vis-à-vis des variations de l'environnement et de la perte de l'un quelconque des robots. Si certains éléments de la meute se retrouvent bloqués, le reste de la meute pourra poursuivre sa mission.

Nous allons maintenant donner des exemples de premières contraintes de positionnement.

Dans l'exemple, représenté sur la figure 1, on peut matérialiser la contrainte de meute par un ensemble de premières contraintes de positionnement relatif entre un robot R3 et ses voisins du premier ordre dans la meute. Cet ensemble comprend deux premières contraintes de positionnement parmi lesquelles une contrainte de distance idéale r devant séparer un robot de ses voisins de premier ordre.

L'ensemble comprend également une contrainte angulaire qui est que ses voisins R2 et R4 doivent être situés à des positions telles que les directions orientées s'étendant depuis le robot jusqu'à ses voisins forment des angles orientés α2 et α4 de +90° et -90° par rapport à la direction orientée du vecteur vitesse idéal.

Dans le deuxième exemple décrit précédemment, la contrainte de meute peut comprendre uniquement une première contrainte de positionnement sur une distance idéale séparant un robot d'un nombre prédéfini de voisins les plus proches.

Dans un troisième exemple, l'ensemble de premières contraintes de positionnement relatifs entre un robot est ses voisins du premier ordre comprend une contrainte de distance idéale r devant séparer un robot de ses voisins les plus proches. Il comprend également une contrainte angulaire consistant à dire que les voisins de premier ordre d'un robot sont situés à des positions telles que les directions orientées s'étendant du robot vers ses voisins forment des angles de 30°, 90°, 150°, -30°, -90°, - 150° avec la direction orientée de la vitesse idéale. Un procédé basé sur cette contrainte est plus rapide et précis qu'un procédé basé sur l'exemple précédent mais moins simple et moins robuste aux aléas.

Sur la figure 2, on a représenté un robot R, 1 selon l'invention d'un ensemble de robots selon l'invention. Chacun de robot de l'ensemble de robots est équipé des moyens figurant sur la figure 2.

Le robot R est équipé des moyens listés ci-dessous, ces moyens étant embarqués à bord dudit robot R :
- des moyens de propulsion PROP, 2, c'est-à-dire un dispositif de propulsion, comme, par exemple, un moteur et des roues, ou une hélice ,
- des moyens d'ajustement de son vecteur vitesse AJ, 3, c'est-à-dire un dispositif permettant d'ajuster la direction du vecteur vitesse du robot, comme par exemple, une colonne de direction permettant de faire pivoter les roues du robot ou un gouvernail,
- des moyens de guidage GUID 4, c'est-à-dire un dispositif de guidage, aptes à élaborer une consigne de guidage du robot correspondant à une correction devant être apportée au vecteur vitesse du robot à partir de l'unique ensemble de contraintes, à partir de mesures éventuelles sur des robots de l'ensemble autres que ledit robots réalisées à bord dudit robot et à partir de mesures de positionnement absolu du robot,
- des moyens de pilotage PIL, 5, c'est à dire un dispositif de pilotage, apte à piloter les moyens de propulsion PROP, 2 et/ou les moyens d'ajustement AJ, 3 pour respecter la consigne de guidage.

Autrement dit, les robots de l'ensemble de robots sont autonomes. Chacun des robots génère ses propres consignes de guidage et assure son propre pilotage de façon à respecter la consigne de guidage. L'ensemble de robots est dépourvu de maître apte à piloter l'ensemble de robots. Cette caractéristique permet, comme nous le verrons par la suite, de rendre l'ensemble de robots robuste.

Il faut noter que la consigne de guidage correspond à une correction devant être apportée au vecteur vitesse effectif du robot à l'instant donné. L'étape de pilotage correspond à une application de cette correction au vecteur vitesse du robot.

Les autres moyens embarqués à bord de chacun des robots figurent sur la figure 2 et seront décrits en même temps que le procédé selon l'invention.

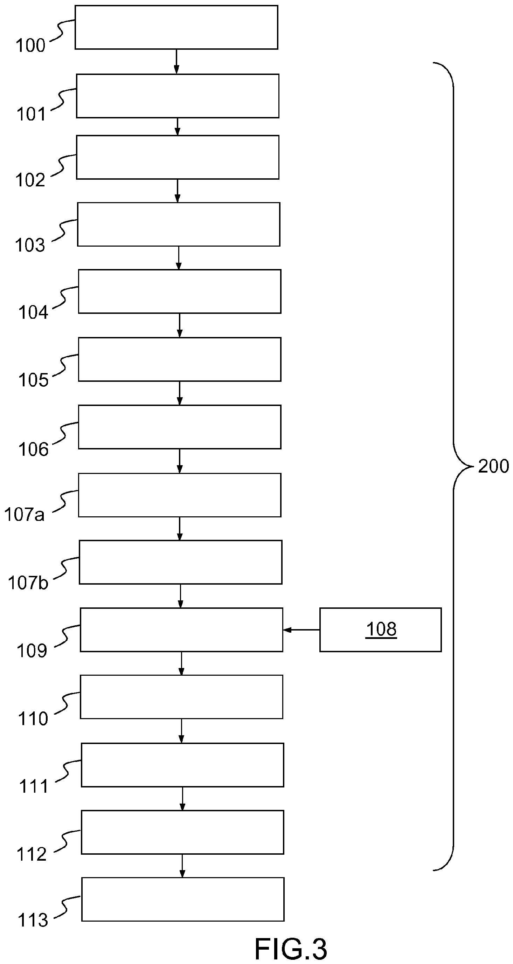

Nous allons maintenant décrire, en référence à la figure 3, le procédé de pilotage selon l'invention.

Ce procédé comprend, pour chacun des robots de l'ensemble une étape de stockage 100, dans des premiers moyens de stockage STOCK, 10, embarqués à bord dudit robot 1, de l'unique ensemble de contraintes. Cette étape est avantageusement mise en oeuvre avant le début de la mission. Les moyens de stockage correspondent avantageusement à un dispositif de stockage. Le dispositif de stockage comprend au moins un espace mémoire.

Dans le procédé selon l'invention, les robots se déplacent dans de l'eau. Il s'agit de robots submersibles. L'invention s'applique également à des robots aptes à se déplacer sur terre, dans tout autre liquide ou dans l'air de façon bi ou tridimensionnelle.

Dans le mode de réalisation de l'invention, les robots sont aptes à se déplacer sur un support, ici au voisinage du fond marin. L'invention s'applique également à des robots aptes à naviguer dans l'eau, à sa surface ou en profondeur. L'invention s'applique également à des robots aptes à voler.

Sur la réalisation de la figure 3, l'étape d'élaboration 200 de la consigne de guidage à un instant donné comprend, pour chaque robot :
- une première étape d'acquisition 102, par les moyens de guidage 4, de la valeur de la contrainte de meute correspondant à la valeur d'un premier ensemble d'au moins un premier paramètre,
- une deuxième étape d'acquisition 103, par les moyens de guidage de la valeur de la contrainte d'appartenance correspondant à la valeur d'un deuxième ensemble d'au moins un deuxième paramètre,

Les paramètres peuvent être la concentration d'une espèce chimique, de la turbidité de l'eau, de la température de l'eau.

Les valeurs des paramètres sont mesurées 101 à l'instant donné au moyen de moyens de mesure de paramètres PAR 6, c'est-à-dire à partir d'un dispositif de mesure de paramètre comprenant des capteurs.

L'étape d'acquisition existe lorsque les valeurs des contraintes de positionnement et/ou respectivement d'appartenance sont variables en fonction des valeurs des ensembles de paramètres considérés. Par exemple, la distance idéale peut être modifiée en fonction de la concentration d'une espèce chimique dans l'eau. Dans ce cas, ces contraintes sont stockées sous formes de fonction des ensembles de paramètres dans les moyens de stockage STOCK.

Le premier et le deuxième ensemble de paramètres peuvent être identiques ou différents et comprendre un ou plusieurs paramètres.

En variante la contrainte de meute et/ou d'appartenance au voisinage du robot présente une seule valeur.

L'étape 200 comprend également :
- une étape d'acquisition 104, lors de laquelle le robot considéré acquiert, au moyen de moyens de perception ou de mesure PERC 7, c'est à dire au moyen d'un dispositif de perception, embarqués à bord du robot, d'éventuelles mesures sur les robots de l'ensemble de robots autres que ledit robot, permettant de les localiser, directement ou indirectement relativement au robot considéré,
- une étape de sélection 105, utilisant lesdites éventuelles mesures, dans laquelle les moyens de guidage 4 sélectionnent un ensemble de voisins effectifs du robot considéré correspondant à un sous-ensemble éventuellement vide de robots de l'ensemble de robots autres que ledit robot qui respecte la contrainte d'appartenance vis-à-vis du robot.

Si le robot n'a reçu aucune mesure sur les autres robots de l'ensemble de robots, alors l'ensemble de voisins effectifs est vide. Autrement dit, le robot reçoit des mesures sur un ensemble de robots appelés robots perceptibles. Si l'ensemble de robots perceptibles est nul, alors l'ensemble de robots effectifs est nul. Aucun des robots ne vérifie la contrainte d'appartenance. Autrement dit, l'étape d'acquisition est une étape réalisée par le robot pour acquérir des mesures portant sur les autres robots de l'ensemble de robots. Ces mesures permettent de localiser les autres robots par rapport au robot. Il est possible que le robot n'acquière aucune mesure sur les autres robots. Les mesures peuvent être réalisées à bord du robot lui-même ou bien être réalisées à bord des autres robots et transmises audit robot par l'intermédiaire de moyens de communication.

Il suffit que les moyens de mesure PERC 7 permettent au robot de lui fournir des mesures lui permettant de positionner les robots dudit ensemble, autres que ledit robot, relativement au robot considéré.

Les moyens de mesure PERC 7 comprennent, par exemple, un sonar. Ils peuvent facultativement comprendre des moyens de communication entre les robots de l'ensemble de robots permettant aux robots de se transmettre des informations comme, par exemple, des grandeurs mesurées au moyen d'un appareil de mesure. Ils peuvent comprendre une balise apte à émettre un signal radio ou acoustique (comme par exemple une balise non directionnelle) et des moyens pour recevoir les signaux émis par les balises. Le fait que la perception des robots ne nécessite pas forcément des moyens de communication permet d'employer ce procédé dans n'importe quel environnement ou une mesure est possible.

Lors de l'étape de sélection 105, lorsque l'ensemble de robots perçus est non nul, on vérifie si un robot perçu par le robot respecte la contrainte d'appartenance par rapport au robot considéré à partir des mesures issues des moyens de perception. La contrainte d'appartenance au voisinage du robot est représentative d'une deuxième contrainte de positionnement relativement audit robot, que les robots perçus, doivent vérifier, à l'instant donné, pour appartenir à l'ensemble de voisins effectifs dudit robot, c'est-à-dire à un ensemble de voisins éligibles parmi les robots perçus. Elle comprend éventuellement une contrainte sur un nombre de robot maximum que peut contenir le voisinage.

La contrainte d'appartenance dépend des moyens de perception utilisés.

Un exemple de contrainte d'appartenance est que la distance séparant un robot perçu du robot considéré doit être inférieure à une distance maximale prédéterminée (pouvant dépendre de la (ou des) valeur(s) du deuxième ensemble de paramètre) ou bien que le rapport entre cette distance et la distance moyenne séparant les robots perçus du robot considéré doit être inférieure à un seuil prédéterminé. Un autre exemple de contrainte est que le robot doit être un des N (N supérieur à 0) robots les plus proches du robot considéré.

Si les robots sont tous équipés d'un sonar actif émettant des pings acoustiques aux mêmes instants, une contrainte d'appartenance peut être que les N robots sélectionnés sont les robots à l'origine des N (N supérieur ou égal à 0) pings acoustiques émis à un instant donné reçus en premier par le robot considéré. Une autre contrainte est que le ou les robots sélectionnés sont ceux qui sont à l'origine des pings acoustiques reçus par le robot considéré avant un instant prédéterminé ou que le ou les robots sélectionnés sont ceux qui sont à l'origine des pings acoustiques reçus par le robot considéré qui présentent un niveau en décibel supérieur à un niveau prédéterminé.

La contrainte d'appartenance au voisinage est donc directement ou indirectement une deuxième contrainte de positionnement des robots par rapport au robot considéré. Dans les exemples précités, elle est soit, directement ou indirectement, une distance maximale que doit vérifier un robot pour appartenir au voisinage effectif du robot considéré, soit une condition d'appartenance aux N robots les plus proches du robot considéré.

Avantageusement, la condition d'appartenance comprend une condition de nombre maximum N de robots que le voisinage peut contenir. Le sous-ensemble de robots correspond est constitué de N robots de l'ensemble de robots autres que ledit robot. Un tel voisinage est appelé « voisinage pointé » en topologie.

Le nombre N de robots peut comprendre le nombre de robots dudit ensemble autres que le robot considéré. Dans ce cas, l'élaboration de guidage globale d'un robot prend en compte tous les autres robots de l'ensemble de robots. Cette caractéristique permet de simplifier le procédé de pilotage des robots et de garantir l'adaptation du système à des conditions de navigation contraignantes.

Avantageusement, le nombre de robots est inférieur au nombre de robots de l'ensemble de robots autres que le robot considéré. Le pilotage des robots est alors réalisé uniquement en fonction d'un voisinage. Il est indépendant du nombre de robots dans la meute. Cela le rend robuste à la perte d'un des robots.

En variante, le nombre maximum est le nombre de voisins de premier ordre du robot dans la configuration de meute. Il est au nombre de 2 dans l'exemple de la figure 1.

L'ensemble de voisins effectifs peut être vide, c'est-à-dire ne comprendre aucun robot, si aucun des robots ne vérifie la contrainte d'appartenance ou si le robot ne mesure la position d'aucun autre robots (lorsque les autres robots sont situés à une distance du robot considéré supérieure à la portée des moyens de perception embarqués à bord du robot).

L'étape d'élaboration de la consigne de guidage du robot comprend en outre, lorsque l'ensemble de voisins effectifs n'est pas vide (comme c'est le cas sur la figure 3), pour chaque voisin effectif :
- une étape de détermination 106 d'une position effective correspondant à la position effectivement occupée par ledit au moins un voisin effectif relativement audit robot à partir des mesures portant sur ledit voisin effectif acquises par ledit robot,
- une étape de détermination 107a d'un ensemble de positions idéales locales correspondant aux positions que pourrait occuper le robot par rapport au voisin effectif pour respecter la contrainte de meute et une étape de détermination 107b d'une position cible correspondant à une position idéale locale la plus rapide à atteindre par le robot pour lequel on détermine la consigne de guidage.

Ce calcul est avantageusement réalisé à partir du vecteur vitesse effectif du robot à l'instant donné. En variante, il s'agit de la position la plus proche du robot. Si deux positions idéales sont équivalentes, le choix est avantageusement effectué par ordre de présentation dans le logiciel plutôt qu'au hasard ce qui pourrait conduire a une oscillation.

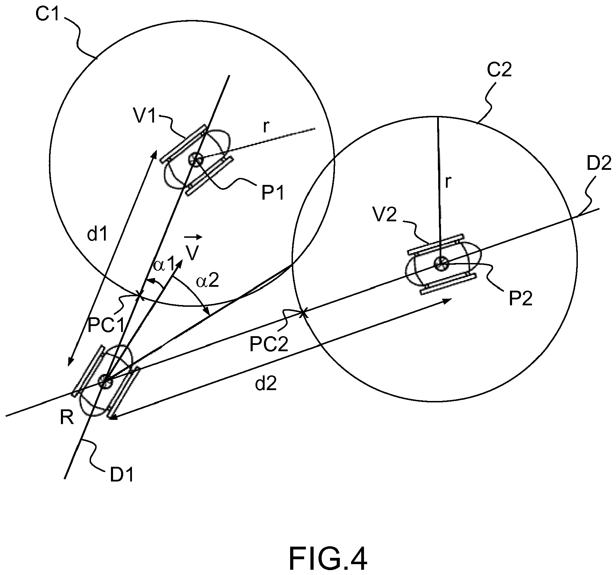

Sur l'exemple représenté sur la figure 4, le robot R a sélectionné un ensemble de voisins effectifs comprenant un premier V1 et un deuxième V2 robots voisins. L'étape de détermination 106 des positions effectivement occupées par l'ensemble de voisins relativement audit robot R consiste à calculer les distances d1, d2 séparant les voisins du robot et les positions angulaires α1, α2 relatives entre les voisins et le robot R à partir des informations issues des moyens de perception équipant le premier robot (par exemple à partir des mesures effectuées par un sonar embarqué à bord du robot). Les positions angulaires relatives correspondent aux angles orientés α1, α2 formés entre le vecteur vitesse V effectif du robot et la droite reliant la position occupée par le voisin V1, V2 et la position occupée par le robot R. A partir de ces informations d1, d2, α et α2 les moyens de guidage 4 peuvent positionner l'ensemble de voisins par rapport au robot R.

Dans ce mode de réalisation, la contrainte de meute comprend uniquement une contrainte de distance idéale r à respecter entre un robot et ses voisins. Les positions idéales locales sont donc ici des cercles c1 et c2 de rayons R centrés autour des positions des voisins V1 et V2 (car les robots se déplacent ici dans un espace à deux dimensions, sinon ce seraient des sphères). Les positions cibles PC1 et PC2 sont ici les positions de ces cercles les plus proches du robot R.

Dans le premier mode de réalisation représenté sur la figure 3, l'étape de détermination de la consigne de guidage 200 comprend en outre une étape de détermination 110 d'un barycentre global correspondant à une moyenne pondérée des positions cibles et de la position idéale. Il s'agit du cas où le domaine de confiance est la position idéale. La position idéale est la position que devrait occuper le robot sur la trajectoire idéale. Cette position est la position que devrait occuper le robot à l'instant d'application de la consigne de guidage, c'est-à-dire l'instant donné ou un instant ultérieur.

Il faut noter que cette étape nécessite une étape préalable d'acquisition 109, par les moyens de guidage 4, de la position du robot à l'instant donné dans un référentiel fixe mesurée 108 au moyens de moyens d'acquisition AQ, 8, ou d'un dispositif d'acquisition, permettant d'acquérir la position du robot dans un référentiel fixe, par exemple le référentiel terrestre avec comme indiqué dans l'introduction une précision moindre que la précision relative aux autres robots..

L'ensemble des positions cibles est pondéré par un premier poids et la position idéale est pondérée par un deuxième poids, les premier et deuxième poids étant non nuls et leur somme étant égale à 1. On remarquera que si l'ensemble de voisins effectifs est vide, le barycentre ainsi calculé est la position idéale. Autrement dit, dans ce cas, la consigne n'est plus définie de façon à respecter une configuration de meute particulière mais uniquement de façon à suivre (ou rejoindre) la position idéale sur la trajectoire idéale.

Les poids sont stockés dans les moyens de stockage STOCK 10 de préférence préalablement à la mission.

Les premier et deuxièmes poids peuvent être fixes ou dépendre de la valeur d'un troisième ensemble d'au moins un paramètre. Le procédé comprend alors avantageusement une étape de mesure de la valeur dudit au moins un troisième paramètre et une étape d'acquisition, par les moyens de guidage, des valeurs des poids pour la valeur dudit troisième ensemble de paramètres avant de calculer le barycentre global.

Le procédé comprend ensuite une étape 111 de détermination d'une erreur affectant la position du robot correspondant au vecteur reliant la position effective du robot au barycentre global.

Le procédé comprend également une étape 112 de détermination d'une correction à apporter au vecteur vitesse effectif du robot afin de réduire cette erreur. La correction peut être une correction du premier ordre et dans ce cas la correction à appliquer au vecteur vitesse effectif du robot est tel que le vecteur vitesse du robot est dirigé depuis la position effective du robot vers le barycentre global.

La correction peut être faite selon de nombreuses méthodes utilisées en automatique, par exemple. Il peut s'agir d'une correction de type PID ou proportionnelle intégrale dérivée.

Le procédé comprend en outre une étape de pilotage 113 du robot de façon à respecter la consigne de guidage, c'est-à-dire de façon à appliquer la correction souhaitée au vecteur vitesse effectif du robot.

Les moyens de guidage sont configurés de façon à pouvoir mettre en oeuvre les étapes 105 à 112 (hormis l'étape 108).

Dans une variante, le domaine d'intérêt ne correspond pas à la position idéale mais une courbe (1D, 2D, ou 3D), une surface (2D ou 3D) ou un volume.

Le barycentre global est alors calculé à partir des positions cibles et à partir d'une position préférée qui n'est plus la position idéale mais qui est une position du domaine de confiance. Il s'agit, par exemple, d'une position du segment centré sur la trajectoire idéale tridimensionnelle, perpendiculaire à celle-ci et passant par la position idéale. Ce cas est utilisé lorsque l'on souhaite positionner les robots en ligne et les espacer les robots les uns des autres perpendiculairement à la trajectoire idéale et de façon symétrique par rapport à cette trajectoire.

Le segment pourrait ne pas être centré par rapport à la position idéale de façon à obtenir une meute disposée de façon non symétrique par rapport à la trajectoire idéale. Il pourrait également être non perpendiculaire par rapport à cette trajectoire de façon à obtenir une meute disposée sur une ligne inclinée par rapport à la trajectoire idéale.

La position préférée est de préférence la position du domaine de tolérance ou domaine de confiance qui est la plus rapidement atteinte par le robot compte tenu de son vecteur vitesse. Il peut aussi s'agir de la position la plus proche du robot.

Le fait de calculer le barycentre à partir d'une position du domaine de tolérance, c'est-à-dire le domaine confiance permet de limiter la tendance de la meute à se compacter sur la trajectoire idéale.

Le domaine de tolérance, c'est-à-dire le domaine de confiance peut présenter une seule valeur ou bien être variable en fonction d'un quatrième ensemble d'au moins un paramètre mesurable. Dans ce dernier cas, le procédé comprend une mesure de la valeur du quatrième ensemble d'au moins un paramètre et une étape d'acquisition de la valeur du domaine de confiance pour ladite valeur avant le calcul du barycentre global.

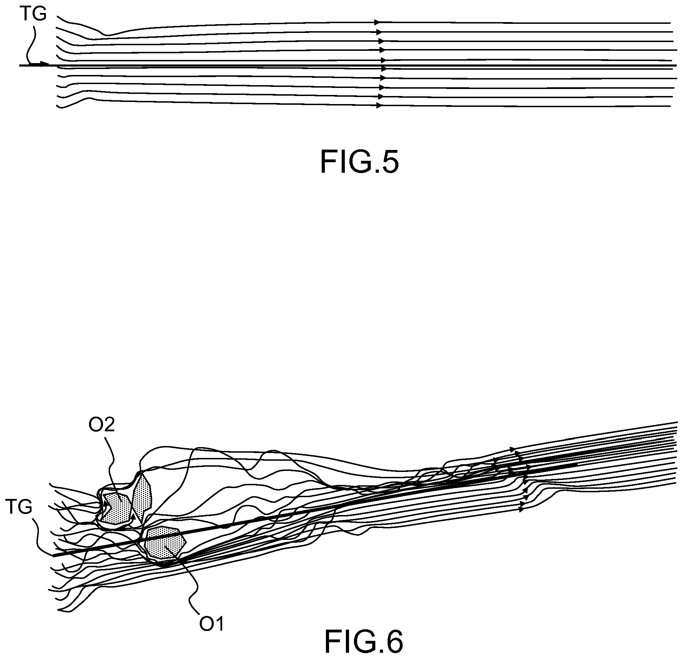

Sur la figure 5, on a représenté, par des lignes munies d'une flèche, des trajectoires associées à des robots qui sont les trajectoires effectivement suivies par ces robots. Cette figure illustre le comportement d'un ensemble de robots qui se pilotent au moyen du procédé selon l'invention selon la dernière variante de réalisation dans laquelle le domaine d'intérêt est un segment perpendiculaire à la trajectoire idéale et centré sur la position idéale. La trajectoire idéale TG est représentée en traits épais. Il s'agit d'une trajectoire linéaire autour de laquelle les robots évoluent idéalement.

Au début de la mise en oeuvre du procédé selon l'invention les robots peuvent être disposés de manière aléatoire. La figure 5 débute à un moment où les robots arrivent quasiment dans la configuration de meute et suivent des trajectoires parallèles à la trajectoire idéale TG.

Sur la figure 5, on constate un resserrement de la meute tôt dans la simulation. Ceci est dû à l'asservissement de la direction des robots sur la trajectoire idéale (ou rail central). Puis les robots reprennent la formation de meute voulue sous l'effet de la contrainte de meute et continuent à suivre des trajectoires parallèles à la trajectoire globale sous l'effet de la consigne globale.

Sur la figure 6, on a illustré un procédé de pilotage d'un ensemble de robots selon l'invention.

Dans ce procédé, lorsqu'aucun obstacle ne vérifiant une condition d'évitement prédéterminée (fournie à l'ensemble des robots) n'est détecté par un robot considéré, l'étape de détermination de la consigne de guidage du robot considéré est réalisée à intervalles de temps réguliers et est envoyée aux moyens de pilotage qui pilotent 113 le robot de façon à respecter la consigne de guidage. Autrement dit, après l'établissement de chaque consigne de guidage, les moyens de pilotage ajustent la vitesse du robot de façon à respecter la consigne de guidage.

Lorsque le robot perçoit un obstacle O1, O2, vérifiant la condition d'évitement le procédé de pilotage comprend des étapes d'établissement de consignes de guidage d'évitement d'obstacle, par les moyens de guidage, qui sont transmises aux moyens de pilotage qui pilotent le robot de façon à respecter cette consigne. Autrement dit, le procédé n'établit plus les consignes de guidage ou ne les transmet plus aux moyens de pilotage. Le procédé comprend une étape d'évitement de l'obstacle par le robot.

Les procédés d'évitement d'obstacles sont des procédés classiques connus de l'homme du métier.

Un exemple de mise en oeuvre de ce type de procédé est donné ci-après. Les moyens de perception du robot perçoivent un obstacle vérifiant une condition d'évitement d'obstacle qui est, par exemple, que l'obstacle est fixe et sur sa trajectoire, devant lui. Les moyens de guidage déterminent si l'obstacle devant lui est plus dans la partie gauche ou plus dans la partie droite de sa zone de perception. Il décélère et va alors dans la direction opposée à la présence de l'obstacle : si l'obstacle est plus présent à gauche qu'à droite, le drone ira à droite et inversement.

Une fois que l'obstacle n'est plus perçu sur la trajectoire du robot, la consigne qui est transmise aux moyens de pilotage est la consigne de guidage, cette consigne étant calculée à intervalles de temps réguliers.

Sur la figure 6, on a représenté par des lignes munies d'une flèche, les trajectoires suivies par un ensemble de robots. Au début du trajet, les robots détectent deux obstacles O1 et O2. Ils mettent en oeuvre une étape d'évitement d'obstacles. Dés que les obstacles sont derrière eux, les robots mettent en oeuvre les étapes d'établissement de la consigne de guidage.

L'environnement représenté sur la figure 6 est très accidenté et pourtant à la fin simulation, la meute forme un ensemble rectiligne du type de celui de la figure 2 et suit la trajectoire idéale. Le même résultat est obtenu même si certains robots sont perdus (c'est-à-dire n'arrivent pas à revenir dans la configuration de meute). Le procédé est robuste vis-à-vis de la perte de certains robots de l'ensemble de robots.

Les moyens de stockage sont, par exemple, des espaces mémoire et les moyens de guidage une fonction de calcul ou bien un calculateur ou un module de calcul.

## Revendications

1. Procédé de pilotage d'un ensemble de robots pour l'amener ou le maintenir dans une configuration de meute prédéterminée et pour qu'il suive une trajectoire globalement parallèle à une trajectoire prédéterminée, le procédé comprenant pour chaque robot de l'ensemble de robots:
- une étape d'élaboration (200) d'une consigne de guidage dudit robot à un instant donné correspondant à une correction à apporter au vecteur vitesse dudit robot,
- une étape de pilotage du robot de façon à respecter la consigne de guidage,
**caractérisé en ce que** les consignes de guidage des robots de l'ensemble de robots étant déterminées à partir d'un unique ensemble d'au moins une contrainte commun à tous les robots de l'ensemble de robots, l'ensemble d'au moins une contrainte comprenant une contrainte de meute, ladite contrainte de meute comprenant au moins un ensemble d'au moins une contrainte de positionnement relatif entre le robot et des robots de l'ensemble de robots, appelés voisins de premier ordre du robot, les plus proches du robot lorsque l'ensemble de robots est dans la configuration de meute, ledit ensemble d'au moins une contrainte de positionnement relatif entre le robot et ses voisins de premier ordre comprenant une première contrainte de distance correspondant à une distance prédéterminée séparant le robot de ses voisins du premier ordre dans la configuration de meute.

2. Procédé de pilotage selon la revendication précédente, dans lequel l'ensemble d'au moins une contrainte comprend plusieurs contraintes dont une contrainte d'appartenance représentative d'une deuxième contrainte de positionnement relatif qu'un autre robot de l'ensemble de robot doit respecter, relativement au robot, pour appartenir à un voisinage dudit robot à l'instant donné, ainsi que la trajectoire et une position, dite position idéale, que devrait occuper ledit robot s'il suivait la trajectoire, la trajectoire étant quadridimensionnelle, et dans lequel l'étape de génération de la consigne de guidage dudit robot à l'instant donné comprend une étape de détermination d'un voisinage dudit robot comprenant chaque autre robot de l'ensemble de robot vérifiant la contrainte d'appartenance au voisinage dudit robot, la consigne de guidage dudit robot à l'instant donné étant élaborée à partir de la position dudit robot :
- relativement à un ensemble d'au moins une position cible définie à partir d'une position effective de chaque robot du voisinage, et à partir de la contrainte de meute et relativement à une position dite préférée lorsque le voisinage est non vide,
relativement à la position préférée lorsque le voisinage du robot est vide.

3. Procédé de pilotage selon la revendication précédente, dans lequel la position préférée est la position idéale.

4. Procédé de pilotage selon la revendication 2, dans lequel la position préférée est une position d'une courbe prédéterminée, d'une surface prédéterminée ou d'un volume prédéterminé la plus rapidement atteinte par le robot compte tenu de son vecteur vitesse.

5. Procédé de pilotage selon l'une quelconque des revendications 2 à 4, dans lequel l'étape d'élaboration (200) de la consigne de guidage comprend :
- une étape d'acquisition (104), pour acquérir, au moyen de moyens de perception (7) embarqués à bord dudit robot, des mesures permettant de localiser les autres robots relativement audit robot,
l'étape de détermination du voisinage utilisant lesdites mesures, le voisinage étant vide lorsque le robot n'a acquis aucune mesure lui permettant de localiser les autres robots lors de l'étape d'acquisition.

6. Procédé de pilotage selon la revendication précédente, dans lequel l'étape d'élaboration de la consigne de guidage dudit robot comprend, lorsque le voisinage comprend au moins un robot appelé voisin effectif, pour chaque voisin effectif :
- une étape de détermination (106) d'une position occupée par ledit voisin effectif relativement audit robot à partir des mesures permettant de localiser ledit voisin effectif,
- une étape de détermination (107a) d'un ensemble de positions que pourrait occuper le robot par rapport au voisin effectif pour respecter la contrainte de meute et une étape de détermination (107b) d'une position cible correspondant à une position de l'ensemble de positions que le robot pourrait atteindre le plus rapidement.

7. Procédé de pilotage selon la revendication précédente, dans lequel l'étape de détermination de la consigne de guidage dudit robot comprend :
- une étape de détermination (109) d'un barycentre global correspondant à une moyenne pondérée de la dite au moins une position cible et de la position idéale par des premiers et respectivement deuxième poids,
- une étape de détermination (111) d'une erreur de position affectant la position du robot pour atteindre le barycentre global,
- une étape de détermination (112) d'une correction à apporter au vecteur vitesse du robot de façon à réduire cette erreur.

8. Procédé de pilotage selon l'une quelconque des revendications 2 à 7, dans lequel l'unique ensemble d'au moins une contrainte comprend au moins une contrainte variable en fonction d'un paramètre mesurable.

9. Procédé de pilotage selon l'une quelconque des revendications 2 à 7, dans lequel l'unique ensemble d'au moins une contrainte comprend au moins une contrainte présentant une unique valeur.

10. Procédé de pilotage selon l'une quelconque des revendications précédentes, dans lequel lorsqu'aucun obstacle vérifiant une condition d'évitement prédéterminée n'est détecté par le robot l'étape d'élaboration de la consigne de guidage du robot est réalisée à intervalles de temps réguliers et est suivie d'une étape de pilotage du robot de façon qu'il respecte la consigne de guidage, et, lorsque le robot détecte au moins un obstacle vérifiant la condition d'évitement prédéterminée d'obstacle, une étape d'établissement d'une consigne de guidage d'évitement d'obstacle suivie d'une étape de pilotage du robot de façon qu'il respecte la consigne de guidage d'évitement d'obstacle.

11. Procédé de pilotage selon la revendication précédente, dans lequel chaque robot génère ladite consigne de guidage et assure l'étape de pilotage de façon à respecter la consigne de guidage.

12. Ensemble de robots aptes à mettre en oeuvre le procédé selon l'une quelconque des revendications précédentes, comprenant des moyens de guidage embarqués à bord de chacun des robots, les moyens de guidage embarqués étant configurés de façon à mettre oeuvre l'étape d'élaboration de la consigne de guidage.

## Patentansprüche

1. Verfahren zum Steuern einer Gruppe von Robotern, um diese in eine vorbestimmte Meutenkonfiguration zu versetzen oder darin zu halten, und damit diese einer global zu einer vorbestimmten Bahn parallelen Bahn folgt, wobei das Verfahren für jeden Roboter der Gruppe von Robotern Folgendes beinhaltet:
- einen Schritt des Erstellens (200) einer Führungsanweisung des Roboters zu einem gegebenen Zeitpunkt, welche einer am Geschwindigkeitsvektor des Roboters vorzunehmenden Korrektur entspricht,
- einen Schritt des Steuerns des Roboters, um die Führungsanweisung zu beachten,
**dadurch gekennzeichnet, dass**, da die Führungsanweisungen der Roboter der Gruppe von Robotern anhand einer einzigen Gruppe von mindestens einer Vorgabe, welche allen Robotern der Gruppe von Robotern gemeinsam ist, bestimmt werden, die Gruppe von mindestens einer Vorgabe eine Meutenvorgabe beinhaltet, wobei die Meutenvorgabe mindestens eine Gruppe von mindestens einer relativen Positionierungsvorgabe zwischen dem Roboter und den Robotern der Gruppe von Robotern beinhaltet, genannt Nachbarn erster Ordnung des Roboters, welche dem Roboter am nächsten sind, wenn die Gruppe von Robotern in der Meutenkonfiguration ist, wobei die Gruppe von mindestens einer relativen Positionierungsvorgabe zwischen dem Roboter und seinen Nachbarn erster Ordnung eine erste Abstandsvorgabe beinhaltet, welche einem vorbestimmten Abstand entspricht, welcher den Roboter von seinen Nachbarn erster Ordnung in der Meutenkonfiguration trennt.

2. Verfahren zum Steuern nach dem vorhergehenden Anspruch, bei welchem die Gruppe von mindestens einer Vorgabe mehrere Vorgaben beinhaltet, darunter eine Vorgabe der Zugehörigkeit, welche eine zweite relative Positionierungsvorgabe darstellt, welche ein anderer Roboter der Gruppe von Robotern in Bezug auf den Roboter beachten soll, um zur Nachbarschaft des Roboters zum gegebenen Zeitpunkt zu gehören, sowie die Bahn und eine Position, genannt Idealposition, die der Roboter einnehmen sollte, wenn er der Bahn folgt, wobei die Bahn vierdimensional ist, und bei welchem der Schritt des Erzeugens der Führungsanweisung des Roboters zum gegebenen Zeitpunkt einen Schritt des Bestimmens einer Nachbarschaft des Roboters beinhaltet, welche jeden anderen Roboter der Gruppe von Robotern beinhaltet, welche die Zugehörigkeitsvorgabe zur Nachbarschaft des Roboters verifiziert, wobei die Führungsanweisung des Roboters zum gegebenen Zeitpunkt anhand der Position des Roboters erstellt wird:
- in Bezug auf eine Gruppe von mindestens einer Zielposition, welche anhand einer effektiven Position eines jeden Roboters der Nachbarschaft und anhand der Meutenvorgabe und in Bezug auf eine bevorzugte Position genannte Position definiert wird, wenn die Nachbarschaft nicht leer ist,
- in Bezug auf die bevorzugte Position, wenn die Nachbarschaft des Roboters leer ist.

3. Verfahren zum Steuern nach dem vorhergehenden Anspruch, bei welchem die bevorzugte Position die Idealposition ist.

4. Verfahren zum Steuern nach Anspruch 2, bei welchem die bevorzugte Position eine Position einer vorbestimmten Kurve, einer vorbestimmten Fläche oder eines vorbestimmten Volumens ist, welche am schnellsten durch den Roboter angesichts seines Geschwindigkeitsvektors erreicht werden kann.

5. Verfahren zum Steuern nach einem der Ansprüche 2 bis 4, wobei der Schritt des Erstellens (200) der Führungsanweisung Folgendes umfasst:
- einen Schritt des Erfassens (104), um mit Hilfe von Wahrnehmungsmitteln (7), welche an Bord des Roboters mitgeführt werden, Messungen zu erfassen, welche es ermöglichen, die anderen Roboter in Bezug auf den Roboter zu lokalisieren,
wobei der Schritt des Bestimmens der Nachbarschaft die Messungen verwendet, wobei die Nachbarschaft leer ist, wenn der Roboter keine Messung erfasst hat, die es ihm ermöglicht, die anderen Roboter im Zuge des Erfassungsschrittes zu lokalisieren.

6. Verfahren zum Steuern nach dem vorhergehenden Anspruch, bei welchem der Schritt des Erstellens der Führungsanweisung des Roboters Folgendes beinhaltet, wenn die Nachbarschaft mindestens einen Roboter enthält, genannt effektiven Nachbarn, und für jeden der effektiven Nachbarn:
- einen Schritt des Bestimmens (106) einer vom effektiven Nachbarn in Bezug auf den Roboter eingenommenen Position anhand der Messungen, welche es ermöglichen, den effektiven Nachbarn zu lokalisieren,
- einen Schritt des Bestimmens (107a) einer Gruppe von Positionen, die der Roboter in Bezug auf den effektiven Nachbarn einnehmen könnte, um die Meutenvorgabe zu beachten, und einen Schritt des Bestimmens (107b) einer Zielposition, welche einer Position der Gruppe von Positionen entspricht, welche der Roboter am schnellsten erreichen könnte.

7. Verfahren zum Steuern nach dem vorhergehenden Anspruch, bei welchem der Schritt des Bestimmens der Führungsanweisung des Roboters Folgendes beinhaltet:
- einen Schritt des Bestimmens (109) eines globalen Baryzentrums, welches einem gewichteten Durchschnitt der mindestens einen Zielposition und der Idealposition jeweils anhand erster und anhand zweiter Gewichte entspricht,
- einen Schritt des Bestimmens (111) eines Positionsfehlers, welcher die Position des Roboters betrifft, um das globale Baryzentrum zu erreichen,
- einen Schritt des Bestimmens (112) einer am Geschwindigkeitsvektor vorzunehmenden Korrektur, um diesen Fehler zu reduzieren.

8. Verfahren zum Steuern nach einem der Ansprüche 2 bis 7, bei welchem die einzige Gruppe von mindestens einer Vorgabe mindestens eine angesichts eines messbaren Parameters variable Vorgabe beinhaltet.

9. Verfahren zum Steuern nach einem der Ansprüche 2 bis 7, bei welchem die einzige Gruppe von mindestens einer Vorgabe mindestens eine Vorgabe beinhaltet, welche einen einzigen Wert aufweist.

10. Verfahren zum Steuern nach einem der vorhergehenden Ansprüche, bei welchem, wenn kein Hindernis, welches eine vorbestimmte Ausweichbedingung verifiziert, vom Roboter erkannt wird, der Schritt des Erstellens der Führungsanweisung des Roboters in regelmäßigen Abständen erfolgt und von einem Schritt des Steuerns des Roboters in der Weise gefolgt ist, dass er die Führungsanweisung beachtet, und, wenn der Roboter mindestens ein Hindernis erkennt, welches die vorbestimmte Ausweichbedingung des Hindernisses verifiziert, einen Schritt des Festlegens einer Führungsanweisung zum Ausweichen vor dem Hindernis, gefolgt von einem Schritt des Steuerns des Roboters in der Weise, dass er die Führungsanweisung zum Ausweichen vor dem Hindernis beachtet.

11. Verfahren zum Steuern nach dem vorhergehenden Anspruch, bei welchem jeder Roboter die Führungsanweisung erzeugt und den Schritt des Steuerns gewährleistet in der Weise, dass die Führungsanweisung beachtet wird.

12. Gruppe von Robotern, die in der Lage ist, das Verfahren nach einem der vorhergehenden Ansprüche umzusetzen, beinhaltend an Bord eines jeden der Roboter mitgeführte Führungsmittel, wobei die an Bord mitgeführten Führungsmittel in der Weise konfiguriert sind, dass sie den Schritt des Erstellens der Führungsanweisung umsetzen.

## Claims

1. A method for piloting a set of robots to bring it into or keep it in a predetermined pack configuration and for it to follow a trajectory that is globally parallel to a predetermined trajectory, the method comprising, for each robot of the set of robots:
- a step of generating (200) a guidance instruction for said robot at a given instant corresponding to a correction to be made to the velocity vector of said robot,
- a step of piloting the robot so as to respect the guidance instruction,
**characterized in that** the guidance instructions of the robots of the set of robots being determined from a single set of at least one constraint common to all the robots of the set of robots, the set of at least one constraint comprising a pack constraint, said pack constraint comprising at least one set of at least one relative positioning constraint between the robot and the robots of the set of robots, called neighbors of the first order of the robot, closest to the robot when the set of robots is in the pack configuration, said set of at least one relative positioning constraint between the robot and its neighbors of the first order comprising a first distance constraint corresponding to a predetermined distance separating the robot from its neighbors of the first order in the pack configuration.

2. The piloting method according to the preceding claim, wherein the set of at least one constraint comprises a plurality of constraints including one constraint of belonging representative of a second relative positioning constraint that another robot of the set of robots must respect, relative to the robot, in order to belong to a vicinity of said robot at the given instant, as well as the trajectory and a position, called ideal position, that said robot ought to occupy if it followed the trajectory, the trajectory being four-dimensional, and wherein the step of generation of the guidance instruction for said robot at the given instant comprises a step of determining of a vicinity of said robot comprising each other robot of the set of robots verifying the constraint of belonging in the vicinity of said robot, the guidance instruction for said robot at the given instant being generated from the position of said robot:
- relative to a set of at least one target position defined from an effective position of each robot of the vicinity, and from the pack constraint and relative to a so-called preferred position when the vicinity is not empty,
- relative to the preferred position when the vicinity is empty.

3. The piloting method according to the preceding claim, wherein the preferred position is the ideal position.

4. The piloting method according to claim 2, wherein the preferred position is a position of a predetermined curve, a predetermined surface or a predetermined volume that the robot reaches most rapidly considering its velocity vector.

5. The piloting method according to any one of claims 2 to 4, wherein the step of generating (200) the guidance instruction comprises:
- an acquisition step (104), to acquire, by perception means (7) embedded on board said robot, measurements making it possible to locate the other robots relative to said robot,
the step of determining the vicinity using said measurements, the vicinity being empty when the robot has not acquired any measurement enabling it to locate the other robots in the acquisition step.

6. The piloting method according to the preceding claim, wherein the step of generating the guidance instruction for said robot comprises, when the vicinity comprises at least one robot called effective neighbor, for each effective neighbor:
- a step of determining (106) a position occupied by said effective neighbor relative to said robot from measurements making it possible to locate said effective neighbor,
- a step of determining (107a) a set of positions that the robot could occupy relative to the effective neighbor to respect the pack constraint and a step of determining (107b) a target position corresponding to a position of the set of positions that the robot could reach most rapidly.

7. The piloting method according to the preceding claim, wherein the step of determining the guidance instruction for said robot comprises:
- a step of determining (109) a global barycenter corresponding to a weighted average of said at least one target position and of the ideal position by first and respectively second weights,
- a step of determining (111) a position error affecting the position of the robot to reach the global barycenter,
- a step of determining (112) a correction to be made to the velocity vector of the robot so as to reduce this error.

8. The piloting method according to any one of claims 2 to 7, wherein the single set of at least one constraint comprises at least one constraint that is variable as a function of a measurable parameter.

9. The piloting method according to any one of claims 2 to 7, wherein the single set of at least one constraint comprises at least one constraint having a single value.

10. The piloting method according to any one of the preceding claims, wherein, when no obstacle verifying a predetermined avoidance condition is detected by the robot, the step of generating the guidance instruction for the robot is performed at regular time intervals and is followed by step of piloting the robot so that it respects the guidance instruction, and, when the robot detects at least one obstacle verifying the predetermined obstacle avoidance condition, a step of generating an obstacle avoidance guidance instruction followed by a step of piloting the robot so that it respects the obstacle avoidance guidance instruction.

11. The piloting method according to the preceding claim, wherein each robot generates said guidance instruction and handles the piloting step so as to observe the guidance instruction.

12. A set of robots suitable for implementing the method according to any one of the preceding claims, comprising guidance means embedded on board each of the robots, the embedded guidance means being configured so as to implement the step of generating the guidance instruction.
